# EUROPEAN PATENT APPLICATION

(11) **EP 1 862 286 A1**
(43) Date of publication of application: **05.12.2007**
(21) Application number: 07109034.4
(22) Date of filing: 28.05.2007
(51) Int. Cl.: B29C 39/00, B24D 3/28, B24D 18/00, C09K 3/14

(54) **Rigid abrasive tool for facing and shaping stone-like or ceramic materials and associated manufacturing method**

(30) Priority: 29.05.2006 IT MO20060169
(71) Applicant: Scalari, Marco, 19020 Vezzano Ligure SP (IT)
(72) Inventor: Scalari, Marco, 19020 Vezzano Ligure SP (IT)
(74) Representative: Modiano, Micaela Nadia

(57) **Abstract**

A rigid abrasive tool for facing and shaping stone-like or ceramic materials, comprising at least one rigid body which is constituted by a resin matrix within which sintered composite abrasive particles are distributed isotropically, the distribution density of the particles being substantially uniform throughout the body and the particles being preferably substantially mutually separated or isolated. The method for producing a rigid abrasive tool for facing and shaping stone-like or ceramic materials comprises the steps of: preparing a resin mixture adapted to constitute a resin matrix; adding to the resin mixture thus prepared a dose of sintered composite abrasive particles to obtain a mix; transferring the mix into a mold; subjecting the mix contained in the mold to a treatment for consolidation of the resin mixture until a rigid body is obtained; extracting the body from the mold.

## Description

The present invention relates to a rigid abrasive tool for facing and shaping stone-like or ceramic materials and to a method for manufacturing said tool.

It is known that the flat surfaces of stone-like or ceramic materials, such as for example plates, panels or tiles made of marble, granite, ceramic or porcelain stoneware, can be subjected to successive treatments which are substantially distinguished into: roughing or sizing, facing and polishing, or as an alternative lapping or brushing, in order to enhance their aesthetic characteristics or simply to obtain surfaces which are more functional for the intended use.

Likewise, the edge faces of such materials also can be subjected to shaping treatments aimed at obtaining precise shapes and dimensions.

Roughing or sizing, facing and polishing/lapping treatments are performed by appropriately provided automatic machines which are equipped with spindles or driving heads for actuating grinding wheels or abrasive tools having various shapes, structures and grain size, where the expression "grain size" references the average dimensions of the abrasive material contained therein.

Abrasive tools mounted on automatic machines can have various shapes in relation to the different manufacturers of the machines and to the particular choices of the user. For example, the most widely used shapes are annulus, frustum, cylinder, sector of a cylinder, and others. The tools are turned about an axis which is perpendicular or substantially parallel to the flat surface to be treated.

The grain size of the abrasive tools used for the various steps of the successive roughing, facing and polishing/lapping/brushing treatments is gradually finer, but it does not necessarily follow a decreasing monotonic trend, in particular in the transition between one treatment and the next.

With particular reference to the treatment for facing the surface of stone-like or ceramic materials, where the expression "facing of ceramic materials" references treatments which use tools with a grain size suitable for the first steps of sizing up to a grade known by the code F220, abrasive tools of three different types are currently used which mutually differ substantially in the nature of the matrix that binds the actual abrasive material: metallic matrix, magnesite matrix and resin matrix. As regards the shaping of the edge face, grinding wheels with a metallic and resin matrix are used.

Abrasive tools with a metallic matrix indeed comprise a metallic matrix within which abrasive particles constituted by industrial diamond powder are dispersed.

Such tools with a metallic matrix are manufactured by sintering inside appropriately provided molds which have the final shape of the tool or of a sector thereof. The metallic powders that constitute the matrix and any filler additives are mixed with the abrasive particles in general with the aid of an organic wetting agent, which is intended to improve the distribution of the two mixed components. The resulting mixture can be transferred into a mold as it is to be sintered or can optionally be subjected to a preliminary granulation step. The term "sintering" references a process during which, as is known, the powders, particles or granules, without melting, are welded to each other by forming intermediate necks.

In, order to obtain sintering, the mixture in the mold is subjected to a pressure on the order of 100-2500 kg/cm² and to temperatures which can vary between 700°C and 1100°C depending on the components of the mixture.

Another way of sintering the mixture is to apply a pressure of 500-2500 kg/cm² without heating to the mixture in the mold in order to obtain a compact, the so-called "green", with a minimum density of 65%-70% with respect to the theoretical value. At this point, the green, which may be extracted or not from the mold, is exposed to the sintering temperature without further applications of pressure. In this case, one speaks of free sintering.

As regards the facing of the plane, abrasive tools with a metallic matrix are used for the first steps of the facing treatment.

However, despite having a high removal efficiency and a long life, such tools have some drawbacks, among which mention must be made that they have an efficiency variation which increases as the grain size decreases, i.e., while the coarser grain sizes are usually capable of removing even more material than necessary, the finer grain sizes often remove less material than necessary to achieve perfect machining.

Another drawback of abrasive tools with a metallic matrix is that during facing they tend to leave on the treated surfaces defects such as scoring, grooves and breaches, which occur particularly every time the grinding wheel is changed and persist for a substantial time after changing.

Further, in the shaping of ceramic materials, tools with a metallic matrix are affected by a gradual loss of sharpness over time. This is due to the compactness of these materials, which causes an excessively low wear of the tool in order to ensure constant replacement of the diamond particles dispersed within the metallic matrix.

Yet another drawback of abrasive tools with a metallic matrix is that they have high unit costs, which can be ascribed mainly to the cost of the raw materials used and to the energy costs of sintering.

Another drawback of abrasive tools having a metallic matrix is that they are obtained with production methods which are scarcely flexible with respect to the variety of shape of currently commercially available tools, since each shape in fact requires a specific mold for sintering, with consequent high fixed and inventory investments.

Abrasive tools with a magnesite matrix comprise silicon carbide powders embedded in a binding matrix which is constituted by Sorel cement, i.e., the cement obtained from the mixing of powdered magnesium oxide with concentrated aqueous solutions of magnesium chloride.

These abrasive tools are used for the intermediate and final steps of the treatment for facing the flat surfaces, i.e., the plane, of stone-like or ceramic materials.

Even these abrasive tools have certain drawbacks, including the fact that they have a limited life, which requires frequent interventions for replacement with consequent interruptions of the process and high inventory management costs.

Another drawback of abrasive tools with a magnesite matrix is that during use they produce a large amount of sludge, on average 0.8 kg per square meter of machined surface, which contains magnesium chloride residues and has to be disposed.

Abrasive tools with a resin matrix are constituted by a matrix of synthetic resin of the thermosetting type in which abrasive particles of industrial diamond are embedded.

These abrasive tools with a resin matrix have limited rigidity with respect to tools having a metallic or magnesite matrix and are used in particular for the last steps of the facing treatment.

These abrasive tools with a resin matrix also have certain defects which are due in particular to their limited rigidity and among which mention must be made of the fact that they have limited machining efficiency, in particular if they contain abrasive particles with grain sizes suitable for the first facing steps.

Another drawback of abrasive tools with a resin matrix is that they have high unit costs with respect to magnesite tools and a relatively limited life if applied to the first steps of facing. This makes it particularly disadvantageous to use them in the first steps of the facing treatment.

From what has been described above it is evident that the facing treatment is currently organized into various steps in sequence, for each of which abrasive tools of different types are used; in general, tools with a metallic matrix are used for the first steps, tools with a metallic or magnesite matrix are used for the intermediate steps, and tools with a magnesite or resin matrix are used for the final steps.

In any case, there is no ideal sequence of the various types of tool to be used for the successive steps of the facing treatment, each of them being a compromise which takes into account several factors, including: the quality of the treated surface, productivity, operating costs, sludge production and grain size scale to be used.

It is therefore evident that currently known abrasive tools make it particularly complicated, awkward and expensive to provide the facing treatment of the surface of stone-like or ceramic materials and their shaping.

Abrasive tools of the flexible type are also known which can be used with tools which can be operated by hand to machine curved surfaces of stone-like or ceramic materials such as for example edges or edge faces.

These flexible abrasive tools comprise a plurality of sectors with a resin matrix in which granules, known in the jargon as chips or pellets, are embedded selectively and are uniformly distributed according to a predefined pattern.

The abrasive pellets or chips have a composite structure and are constituted by sintered metallic powders together with abrasive particles of diamond or CBN (cubic boron nitride).

Flexible abrasive tools of this type are known from EP 0 855 249 A1 and from US 5,247,765.

EP 0 855 249 A1 discloses a flexible abrasive tool which comprises a plurality of sectors which are mutually spaced according to a preset pattern so as to give flexibility to the overall structure of the tool. For example, the sectors are arranged along concentric circles or along a grid. Each sector comprises chips or pellets of metallic powders and particles of diamond which are sintered and embedded in a resin matrix.

The individual sectors that compose these tools are produced by distributing the chips or pellets within an appropriately provided cavity of a mold of a sector, so that the various chips or pellets are in contact with each other. Subsequently, a resin under pressure is injected into each cavity thus filled with chips or pellets in mutual contact and fills the voids between the individual chips or pellets. The sectors thus produced are then applied according to a predefined pattern on a flat supporting element.

As an alternative, such tools are produced by distributing the chips or pellets within appropriately provided cavities of a mold, each cavity corresponding to a sector of the tool, so that the chips or pellets touch each other. Subsequently, a resin is introduced in each cavity thus filled and a substantially flat and flexible supporting element is then arranged on the mold. By closing the mold and applying preset pressures and temperatures, the resin fills the interspaces between the individual chips and pellets of each sector and each sector is consolidated directly on the supporting element.

US 5,247,765 discloses a flexible abrasive tool which is constituted by a flexible flat supporting element, on one face of which there is a resin matrix which has protrusions, again made of resin, which are mutually spaced and distributed according to a preset pattern, so as to give flexibility to the overall structure of the tool. The protrusions selectively embed individual abrasive pellets or chips which are preferably conical or frustum-shaped. The pellets or chips are constituted by sintered metallic powders which contain abrasive particles constituted by diamond. Such tools are produced by distributing selectively a single chip or pellet within an appropriately provided cavity of a mold, each cavity corresponding to a respective protrusion of the matrix. After selectively arranging a single chip or pellet within a corresponding cavity of the mold, a synthetic resin in the liquid state is poured into the mold, and a flexible flat supporting element is arranged above said resin. The resin, by curing, forms a continuous layer of resin matrix which on one side is supported by the flat supporting element and on the other side has uniformly distributed protrusions, in each of which a corresponding chip or pellet is embedded. As an alternative, the chips or pellets can be fixed beforehand to a supporting mesh according to a precise pattern which corresponds to their arrangement in the individual cavities of the mold.

Known chips or pellets are produced with conventional sintering methods, which provide for the application of specific pressures and temperatures to the material loaded into appropriately provided molds.

The chips or pellets are produced with the selected final shape by using appropriately provided molds or, if they are irregularly shaped, by breaking up a blank, such as a plate, which is sintered in an appropriately provided mold.

These abrasive tools of the flexible type cannot be used in automatic machines for facing the surface of stone-like or ceramic materials: their flexibility in fact does not allow to have an effective planing effect of the roughed material, an effect which has to be obtained by facing before being able to pass to a subsequent polishing treatment.

These abrasive tools of the flexible type, moreover, cannot be used in automatic machines for shaping treatments, since their very flexibility does not allow the necessary dimensional control.

Moreover, it is noted that these abrasive tools of the flexible type require long, complex and elaborate production processes and the use of appropriately provided and expensive molds both for sintering the chips or pellets and for forming the tools or their sectors.

The aim of the present invention is to solve the above mentioned drawbacks, by providing a rigid abrasive tool for facing and shaping stone-like or ceramic materials which can be used in particular in all the intermediate and final steps of facing and shaping with high machining efficiency and high productivity.

Within this aim, an object of the present invention is to provide a rigid abrasive tool which during use does not produce sludge or waste to be disposed of significantly with respect to the waste or sludge caused by the removal of the machined material and allows to obtain treated surfaces of high quality.

Another object of the present invention is to provide a rigid abrasive tool which can be manufactured in any shape and size simply and rapidly and at low cost.

Another object of the present invention is to provide a rigid abrasive tool which allows to perform, during shaping, correct size control of the processed materials.

Another object of the present invention is to provide a method which allows to produce rigid tools for facing and shaping stone-like or ceramic materials simply, rapidly and cheaply with a limited number of steps.

Another object of the present invention is to provide a method which is simple, relatively easy to provide in practice, safe in use, effective in operation, and has a relatively low cost.

This aim and these and other objects, which will become better apparent hereinafter, are achieved by the present method for producing a rigid abrasive tool for facing and shaping stone-like or ceramic materials, characterized in that it comprises the steps of:
- preparing a resin mixture which is adapted to constitute a resin matrix,
- adding to the resin mixture thus prepared a dose of sintered composite abrasive particles to obtain a mix,
- transferring the mix into a mold,
- subjecting the mix contained in the mold to a treatment for consolidation of the resin mixture until a rigid body is obtained,
- extracting the body from the mold.

This aim and these objects are also achieved by the present rigid abrasive tool for facing and shaping stone-like or ceramic materials, characterized in that it comprises:
- at least one rigid body constituted by a resin matrix within which sintered composite abrasive particles are distributed isotropically, the density of the distribution of the particles being substantially uniform throughout the body and the particles being preferably substantially mutually separated or isolated.

In a preferred embodiment, the sintered composite abrasive particles are obtained by free or isostatic sintering.

Further characteristics and advantages of the present invention will become better apparent from the following detailed description of a preferred but not exclusive embodiment of a method for producing a rigid abrasive tool for facing and shaping stone-like or ceramic materials according to the invention and of an abrasive tool thus obtainable, illustrated by way of non-limiting example in the accompanying drawings, wherein:

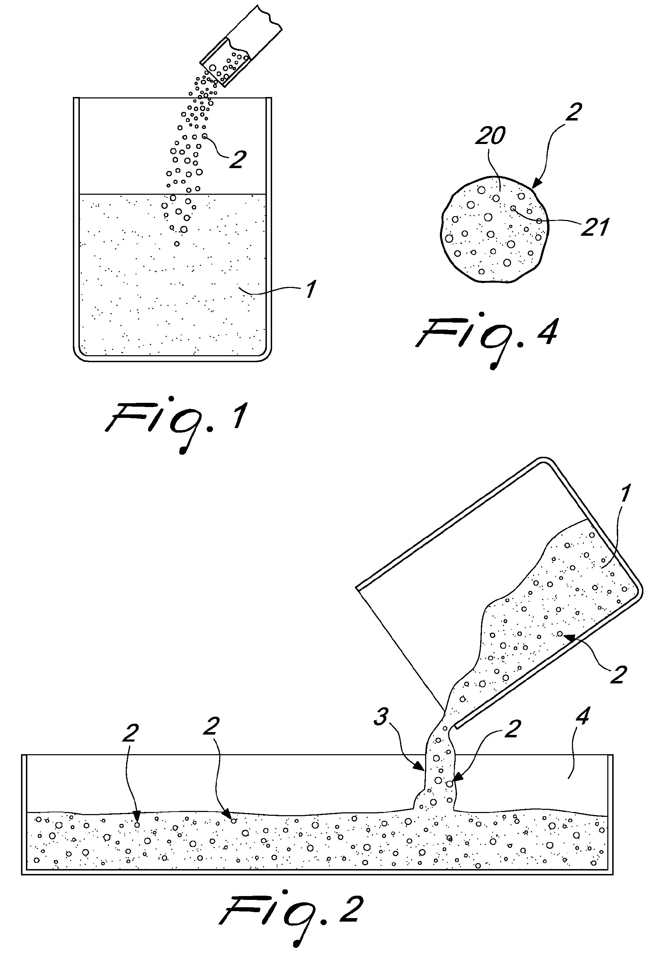

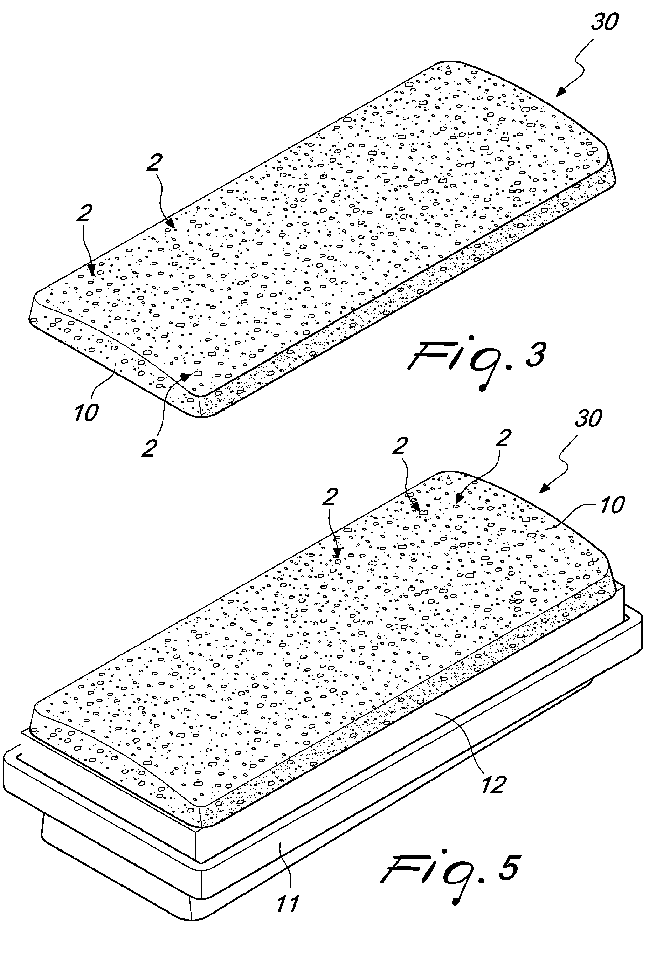

Figures 1 and 2 are schematic views of some steps of the method according to the invention;
Figure 3 is a schematic view of a possible embodiment of the body of the tool according to the invention;
Figure 4 is a schematic enlarged-scale view of a sintered composite abrasive particle of the tool according to the invention;
Figure 5 is a schematic view of a possible embodiment of the tool according to the invention.

With reference to the figures, a method according to invention comprises at least the following steps:
- preparing a resin mixture 1 which is adapted to constitute a resin matrix 10,
- adding to the resin mixture 1 thus prepared a dose of sintered composite abrasive particles 2 to obtain a mix 3,
- transferring the mix 3 into a cavity 4 of a mold,
- subjecting the mix 3 contained in the mold to a treatment for consolidation of the resin mixture 1 until at least one rigid body 30 is obtained, and
- extracting the body 30 from the mold.

The resin mixture 1 comprises at least one synthetic resin of the thermosetting type, such as for example polyester resins, epoxy resins, melamine resins, phenolic resins and the like, or of the thermoplastic type, such as for example polyamides, polyimides, polyethers or similar polymers and copolymers.

The resin mixture 1 further comprises at least one additive material of the surfactant or viscosity-modifying, cross-linking and catalyst, lubricating and process-assistive, filler, wetting or abrasive type.

It is possible to use the following as an additive material of the surfactant type: silicone surfactants, polyglycols, hydrocarbon diluents, and thixotropic agents.

It is possible to use the following as cross-linking and catalyst agents: organic peroxides, cycloaliphatic or aromatic amines, phenols, organic dioxides.

It is possible to use the following as additive material of the filler type: calcium carbonate, ceramic oxides, quartz, barium sulfate, pumice.

It is possible to use graphite and metallic stearates as additive material of the lubricating and process-assistive type.

Polyglycols, furfuryl alcohol and resols can be used as additive material of the wetting type.

Silicon carbide, corundum, boron carbide or CBN can be used as an abrasive additive material.

As is known to the person skilled in the art, for each type of resin it is possible to find other additives, in addition to the ones listed by way of example for each category, and other methods for their application.

In a preferred embodiment, the resin mixture 1 comprises an epoxy resin from DGEBA and, as a curing agent, cycloaliphatic diamine in a quantity which can vary between 20% and 40% by weight, silicone-based surfactants in a quantity which can vary between 0.2% and 1.5% by weight, white corundum with an average grain size comprised between 80 and 200 µ in a quantity which can vary between 5% and 20%, and additive materials of the filler type in a quantity which can vary between 15% and 35% by weight.

An amount of sintered composite abrasive particles 2 which can vary between 15% and 45% by weight is then added to the resin mixture.

In another preferred but not exclusive embodiment, the resin mixture 1 comprises a phenolic resin between 20% and 40% by weight, wetting agents in a quantity which can vary between 1 % and 4% by weight, white corundum with an average grain size comprised between 60 and 120 µ in a quantity which can vary between 5 and 20% by weight, and additive materials of the filler type in a quantity which can vary between 15 and 35% by weight, and solid lubricants between 1% and 5%.

A quantity of sintered composite abrasive particles 2 which can vary between 15% and 45% by weight is then added to the resin mixture.

The components of the resin mixture 1 are mixed with the aid of known devices for a time on the order of a few tens of minutes, for example 15 minutes, before adding the sintered composite abrasive particles 2.

After adding the selected dose of sintered composite abrasive particles 2 to the resin mixture 1 that has been prepared, the mix 3 is obtained which is transferred into the cavity 4 of a mold.

The cavity 4 has the final shape of the abrasive tool to be obtained.

The mix 3 is then subjected to a consolidation treatment, i.e., cross-linking and curing of the resin mixture 1, until the rigid body 30 is obtained; this treatment depends on the nature of the resin mixture 1 that is used.

The poured mix 3 is introduced in an oven at approximately 40°C and the temperature is then gradually raised to 130°C over 10 hours, within ordinary oscillations, and kept at that level for two hours until the rigid body 30 is obtained which is finally extracted from the mold.

The sintered composite abrasive particles 2 comprise at least one metallic powder 20 and at least one abrasive powder 21.

The metallic powder 20 is selected from the group that comprises: cobalt, copper, tin, tungsten, iron, nickel and the like, and normally commercially available pulverized pre-alloyed materials can also be used.

The abrasive powder 21 is selected from the group that comprises: industrial diamond, industrial diamond of the type coated for example with copper, nickel, titanium, silicon or of the so-called spiked type, i.e., with protrusions distributed on the outer surface, CBN (cubic boron nitride) and the like.

The sintered composite abrasive particles 2 preferably have an irregular shape and an average diameter comprised between 0.5 mm and 5 mm.

The sintered composite abrasive particles 2 are obtained by traditional, free, isostatic or pseudoisostatic sintering.

The expression "traditional sintering" references the process for consolidation of the metallic powders 20 and of the mixed abrasive powders 21 within appropriately provided molds by way of the simultaneous action of pressure and temperature.

The expression "free sintering" references the process for the consolidation of granules of the metallic powders 20 and the abrasive powders 21 which are mixed and preferably compacted in the green state, without having to apply any further pressure; this allows to perform sintering of the granules even if they are not contained in molds.

The expression "isostatic sintering" references the process for consolidation of the metallic powders 20 and the abrasive powders 21 which are mixed by direct or indirect application of pressure by means of the action of a hot or cold fluid.

The expression "pseudoisostatic sintering" references here a process for the consolidation of the metallic powders 20 and the abrasive powders 21 which is similar to isostatic sintering but in which the pressure is not equivalent in every point of the surface of the granule to be sintered but is applied along preferential directions thereto.

The tool according to the invention comprises the rigid body 30, which is constituted by the continuous resin matrix 10 within which the sintered composite abrasive particles 2 are distributed isotropically, the distribution density of said particles being substantially uniform throughout the body 3 0.

The sintered composite abrasive particles 2 are distributed isotropically in that they are distributed equally, i.e., in a non-selective and not predetermined manner according to a preset and precise pattern, so as to give the body 30 the same physical characteristics in every direction.

Likewise, the expression "substantially uniform distribution density" references a density which is equal in every point of the body 30 within percentage variations on the order of 10%.

In a preferred embodiment, the distribution density of the sintered composite abrasive particles 2 varies between 30% and 60% by volume.

Further, inside the body 30 the sintered composite abrasive particles 2 are substantially isolated with respect to each other, i.e., are mutually separated without contact with each other.

The body 30 is fixed, for example by adhesive bonding, to a surface of a supporting element 11 which can be coupled to a machine tool of the automatic type.

The body 30 is fixed to the supporting element 11 directly or by interposing a flat coupling layer 12 and has opposite faces which are adhesive-bonded respectively to the body 30 and to the support 11.

Advantageously, when the tool according to the invention is used to shape the edges of ceramic or stone-like materials, the body 30 and accordingly the support 11 are substantially circular or annular.

The invention thus conceived is susceptible of numerous modifications and variations, all of which are within the scope of the appended claims.

In practice it has been found that the invention achieves the proposed aim and objects.

The method according to the invention in fact allows to produce cheaply, simply and rapidly and with a reduced number of steps a rigid abrasive tool for facing and shaping stone-like or ceramic materials which already has the final chosen shape.

In particular, it is noted that the method according to the invention uses sintered composite abrasive particles which are processed in a mixture together with the resin mixture which constitutes the matrix as if they were an ordinary additive such as a filler.

Although the abrasive tool according to the invention has a resin base, it has a rigid structure constituted by a continuous resin matrix in which the sintered composite abrasive particles are dispersed and firmly anchored. Such particles are distributed substantially isotropically and homogeneously and are substantially isolated and separated from each other. This structure allows the tool according to invention to be used with sintered composite abrasive particles which contain industrial diamond or other superabrasive of various grain sizes in the various steps, particularly the intermediate and final steps, of the treatment for facing or shaping stone-like or ceramic materials.

Further, the tool according to the invention has a high abrasion efficiency if compared with a normal resin-based tool of equal grain size or with a tool having a metallic matrix for steps of medium-fine facing, for which the tool according to invention is intended.

The tool according to the invention produces, during use, sludge to be disposed of in quantities which are entirely negligible with respect to the quantities produced by removal of the machined material during facing and shaping treatments.

Further, all the details may be replaced with other technically equivalent ones.

In practice, the materials used, as well as the shapes and the dimensions, may be any according to requirements without thereby abandoning the scope of the protection of the appended claims.

The disclosures in Italian Patent Application No. MO2006A000169, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for producing a rigid abrasive tool for facing and shaping stone-like or ceramic materials, **characterized in that** it comprises the steps of:
- preparing a resin mixture which is adapted to constitute a resin matrix,
- adding to the resin mixture thus prepared a dose of sintered composite abrasive particles to obtain a mix,
- transferring said mix into a mold,
- subjecting the mix contained in said mold to a treatment for consolidation of said resin mixture until a rigid body is obtained,
- extracting said body from said mold.

2. The method according to claim 1, **characterized in that** said resin mixture comprises at least one synthetic resin of the thermosetting or thermoplastic type.

3. The method according to claim 2, **characterized in that** said synthetic resin of the thermosetting type is selected from the group that comprises polyester, epoxy, melamine, phenolic resins.

4. The method according to claim 2, **characterized in that** said synthetic resin of the thermoplastic type is selected from the group that comprises polyamides, polyimides, polyethers or similar polymers and copolymers.

5. The method according to one or more of the preceding claims, **characterized in that** said resin mixture comprises at least one additive material of the surfactant, viscosity-modifying, cross-linking, catalyst, lubricating, process-assistive, filler, wetting or abrasive type.

6. The method according to one or more of the preceding claims, **characterized in that** said sintered composite abrasive particles are added in doses which can vary between 15% and 45% by weight to said resin mixture.

7. The method according to one or more of claims 2 to 6, **characterized in that** said resin mixture comprises said synthetic resin in a quantity which can vary between 20% and 40% by weight.

8. The method according to one or more of claims 5 to 7, **characterized in that** said resin mixture comprises said additive materials in quantities which can vary between 15% and 35% by weight.

9. The method according to one or more of the preceding claims, **characterized in that** said sintered composite abrasive particles comprise at least one metallic powder and at least one abrasive powder.

10. The method according to claim 9, **characterized in that** said at least one metallic powder is selected from the group which comprises: cobalt, copper, tin, tungsten, iron, nickel, pre-alloyed materials and the like.

11. The method according to claim 9 or 10, **characterized in that** said abrasive powder is selected from the group that comprises: industrial diamond, coated industrial diamond, CBN and the like.

12. The method according to one or more of the preceding claims, **characterized in that** said sintered composite abrasive particles have an average diameter comprised between 0.5 mm and 5 mm.

13. The method according to one or more of the preceding claims, **characterized in that** said sintered composite abrasive particles are obtained by traditional, free or isostatic sintering.

14. A method for producing composite abrasive particles, **characterized in that** it comprises the steps of:
- preparing a mixture which comprises at least one metallic powder and at least one abrasive powder,
- subjecting the resulting mixture to a thermal treatment for free or isostatic sintering.

15. A rigid abrasive tool for facing and shaping stone-like or ceramic materials, obtainable with the method according to one or more of claims 1 to 13, **characterized in that** it comprises:
- at least one said rigid body, which is constituted by a resin matrix within which said sintered composite abrasive particles are distributed isotropically, the distribution density of said particles being substantially uniform throughout said body.

16. The tool according to claim 15, **characterized in that** said sintered composite abrasive particles are substantially mutually isolated.

17. The tool according to claim 15 or 16, **characterized in that** said density varies between 30% and 60% by volume.

18. The tool according to one or more of claims 15 to 17, **characterized in that** it comprises a supporting element which can be coupled to a machine tool and to a surface to which said body is fixed.

19. The tool according to claim 18, **characterized in that** it comprises a coupling layer which is substantially flat and interposed between said surface and said body.

20. The tool according to claim 18 or 19, **characterized in that** said body is adhesive-bonded to said surface of the support.

21. The tool according to claim 19, **characterized in that** said coupling layer has opposite faces which are adhesive-bonded respectively to said body and to said surface of said support.
